# EUROPÄISCHE PATENTSCHRIFT

(11) **EP 2 781 158 B1**
(45) Veröffentlichungstag und Bekanntmachung des Hinweises auf die Patenterteilung: **25.11.2015**
(21) Anmeldenummer: 13163232.5
(22) Anmeldetag: 10.04.2013
(51) Int. Cl.: A01N 65/00, A01N 65/22, A01N 65/36, A01P 1/00, A01N 37/04, C11D 1/83, C11D 1/29, C11D 1/75, C11D 3/20, C11D 3/48, C11D 3/50, C11D 1/14, A01N 37/36

(54) **Reinigungs- und Pflegemittel für Nutztiere**
Cleaning and care agent for livestock
Produit de nettoyage et de soin pour bétail

(43) Veröffentlichungstag der Anmeldung: 24.09.2014
(73) Patentinhaber: Menno Chemie-Vertrieb GmbH, 22850 Norderstedt (DE)
(72) Erfinder: Nevermann, Jan, 22850 Norderstedt (DE); Zerling, Wolfgang, 24568 Kaltenkirchen (DE)
(74) Vertreter: Becker Kurig Straus

(56) Entgegenhaltungen:
- EP-A1- 0 948 892
- EP-A1- 2 481 288
- WO-A1-2009/082797
- WO-A2-2009/002465
- US-A1- 2003 083 222
- US-A1- 2010 172 848

## Beschreibung

Nachfolgend wird ein Reinigungs- und Pflegemittel vom Abspültyp für Nutztiere, insbesondere zur Verwendung bei der hygienischen Tierwaschung und besonders bevorzugt zur Verringerung des Antibiotikabedarfs in der Intensivtierhaltung, offenbart. Es kann hauptsächlich in der Massentierhaltung von Schweinen und Sauen eingesetzt werden. Die vorliegende Erfindung betrifft das Mittel zur Verwendung in einem Verfahren zur Vorbeugung von Ferkelruß, bakterieller Meningitis und Arthritis in der Intensivtierhaltung von Schweinen, Ferkeln und Sauen.

Reinigungs- und Pflegemittel für Nutztiere müssen zahlreiche Anforderungen erfüllen. Im Idealfall sollen sie einerseits z. B. bei unsachgemäßem Gebrauch keine ernsten Gefahren für Mensch oder Tier darstellen, andererseits sollen sie als Allheilmittel bei Ungezieferbefall, leichten Erkrankungen oder Blessuren dienen, die nicht der Behandlung durch einen Tierarzt bedürfen. Die zahlreichen bekannten Mittel dieser Art haben meistens den Nachteil, dass sie nur für ganz bestimmte Anwendungen vorgesehen sind und/oder chemische Mittel darstellen, die bei Mensch und Tier Allergien hervorrufen und bei Überdosierung oder falscher Anwendung zu ernsten Gesundheitsgefährdungen führen können. Bekannt sind z. B. Unverträglichkeiten und Reizungen der Augenschleimhäute durch die genannten chemischen Mittel.

Bei der Intensivtierhaltung bzw. der Massentierhaltung besteht generell jeden Tag Seuchengefahr. Bekommt ein Tier eine Infektion, so kann es leicht die anderen anstecken und so großen wirtschaftlichen Schaden verursachen. Deshalb werden vielerorts Antibiotika eingesetzt. Bei der Tierhaltung werden grundsätzlich zwei Anwendungsformen von Antibiotika unterschieden: Zum einen als Tierarzneimittel zur fallweisen therapeutischen Behandlung von kranken Tieren und andererseits als Medizinalfutter, als Wachstums- oder Leistungsförderer und Infektionsschutz zur vorbeugenden Behandlung von Tierherden.

Antibiotikazusätze im Tierfutter zur Leistungsförderung sind vielerorts in Europa schon seit 1997 verboten worden. Nach den Skandalen um verseuchtes Schweinefleisch haben sich auch die Agrarminister der EU Ende 2001 darauf geeinigt, Antibiotika in Tierfutter zu verbieten. Jedoch ist der Antibiotika-Einsatz z. B. in der Schweinezucht bis heute kaum rückläufig, da diese Substanzen weiterhin im therapeutischen Bereich zum Einsatz kommen. Ein Problem daran ist aber, dass die stetige Gabe von Antibiotika an zigtausende von Tieren die Bildung und Vermehrung resistenter Keime begünstigt.

Die EP 2 481 288 A1 offenbart eine zur Desinfektion geeignete Zusammensetzung, welche eine organische Säure, ein Tensid und ein ätherisches Öl enthält und welche zur Desinfektion von Räumen, Gegenständen, medizinischen Instrumenten, Materialien, aber auch von Haut eingesetzt werden kann.

Die EP 0 948 892 A1 offenbart eine desinfizierende Zusammensetzung, wie sie zur Reinigung von harten Oberflächen eingesetzt wird. Die Zusammensetzung kann Zitronensäure, ein Tensid, einen Schaumverstärker und ein ätherisches Öl enthalten.

Die US 2003/0083222 A1 offenbart eine Zusammensetzung zum Desinfizieren von harten Oberflächen. Die Zusammensetzung enthält eine Säure, ein Tensid, ein ätherisches Öl und ein Aminoxyd als Schaumverstärker.

Die WO 2009/082797 A1 beschreibt eine Zusammensetzung, welche als Flüssigseife formuliert sein kann, die ebenfalls ätherisches Öl von speziellen Pflanzengattungen, Zitronensäure, ein Tensid und ein Aminoxyd enthält. Die Zusammensetzung hat eine hautreinigende Wirkung.

Die US 2010/0172848 A1 offenbart eine Zusammensetzung zur Desinfektion von Haut, welche eine organische Säure, ein Tensid und ein ätherisches Öl enthält.

Die WO 2009/002465 A2 offenbart eine schäumende Zusammensetzung zur Bekämpfung von Ameisen. Die Zusammensetzung enthält eine organische Säure, ein Tensid und ein Aminoxyd sowie ein ätherisches Öl.

Der Erfindung liegt deshalb die Aufgabe zugrunde, ein Reinigungs- und Pflegemittel vom Abspültyp für Nutztiere, insbesondere für die Intensiv- oder Massentierhaltung bereitzustellen, welches möglichst universell anwendbar ist und auch bei unsachgemäßen Gebrauch keine ernsten Gesundheitsgefahren für Mensch und Tier darstellt und auch die zuvor beschriebenen Nachteile vermeidet. Insbesondere soll das Reinigungs- und Pflegemittel dazu geeignet sein den Antibiotikabedarf in der Intensivtierhaltung zu verringern.

Gelöst wird diese Aufgabe durch ein Mittel zur Verwendung in einem Verfahren zur Vorbeugung von Ferkelruß, bakterieller Meningitis und Arthritis in der Intensivtierhaltung von Schweinen, Ferkeln und Sauen, wobei das Mittel die folgenden Komponenten umfasst:
(a) 1 bis 20 Gew.-% mindestens einer organischen Säure,
(b) 0,5 bis 50 Gew.-% mindestens eines Tensids,
(c) 0,5 bis 10 Gew.-% mindestens eines Schaumverstärkers,
   gegebenenfalls (d) 1,0 bis 25 Gew.-% mindestens eines Hydrotropierungsmittels,
(e) 0,1-5 Gew.-% mindestens eines ätherischen Öls,
(f) als Rest Wasser sowie gegebenenfalls (g) übliche Zusatz- und Hilfsstoffe, wobei die Komponenten (a) bis (g) zusammen 100 Gew.-% ergeben.

Das erfindungsgemäß eingesetzte Mittel ist ein Reinigungs- und Pflegemittel vom Abspültyp. Es wird insbesondere in der hygienischen Tierwaschung, besonders bevorzugt zur Verringerung des Antibiotika-Bedarfs bei der Intensivtierhaltung eingesetzt. Eine weitere Anwendung besteht ebenfalls im Einsatz in der Tiergeburtshygiene.

Das Tierwaschmittel entfernt organische (alkalische) Verschmutzungen, wie z.B. Gülle und Güllebestandteile, aber auch hartnäckige Verkrustungen und verändert auch den Geruch der Tiere. Als besonders vorteilhaft hat sich hierbei ein hoher Tensidanteil in Kombination mit einem Schaumverstärker und in Verbindung mit einer organischen Säure sowie einem ätherischen Öl herausgestellt. Der sich bildende Schaum haftet gut am Tier und führt zu einer gründlichen und nachhaltigen Reinigung. Überraschenderweise hat sich ferner gezeigt, dass das erfindungsgemäße Mittel zu keiner oder einer deutlich verminderten Reizung der Augenbindehäute als handelsübliche Produkte führt, die Abheilung offener, beispielsweise durch Beißereien entstandener Wunden sehr positiv beeinflusst wird und die Waschung die Egalisierung des Hygienestatus verschiedener Herkünfte fördert. Insgesamt konnte beobachtet werden, dass durch den Einsatz des erfindungsgemäßen Mittels überraschenderweise der Antibiotika-Einsatz in der Massentierhaltung, insbesondere in Feldversuchen bei Ferkeln, um bis zu 50% gesenkt werden konnte (im Vergleich zu nicht behandelten Tieren).

Weiterhin konnte überraschenderweise mit dem Mittel gezeigt werden, dass dieses beim Einstallen im Abferkelstall eingesetzt werden kann, indem die Sauen vor dem Abferkeln damit abgewaschen werden und auch somit der Antibiotika-Einsatz massiv gesenkt werden konnte, sodass ein besserer Hygienezustand und daher widerstandsfähigere Zuchttiere erzielt werden können.

Das Mittel enthält mindestens eine organische Säure, wobei die mindestens eine Säure, bevorzugt ausgewählt ist aus der Gruppe, bestehend aus Zitronensäure, Weinsäure, Äpfelsäure und Gemischen davon. Besonders bevorzugt kann ein Gemisch aus Zitronensäure und Weinsäure eingesetzt werden. Der Anteil der organischen Säure oder des Gemisches von organischen Säuren im erfindungsgemäßen Mittel beträgt 1 bis 20 Gew.-%, vorzugsweise 2 bis 15 Gew.-%, noch bevorzugter 4 bis 10 Gew.-% und am bevorzugtesten 6 bis 8 Gew.-%. Die Säuren werden vorzugsweise in Lebensmittelqualität eingesetzt.

Das Reinigungs- und Pflegemittel enthält mindestens ein Tensid. Die einsetzbaren Tenside können beispielsweise anionische, nicht ionische oder amphotere Tenside oder geeignete Zusammensetzungen miteinander oder untereinander sein. Insbesondere können Alkylethersulfate, Alkyl- und/oder Arylsulfonate, Alkylsulfate, Amphotenside, Betaine, Alkylamidoalkylamine, alkylsubstituierte Aminosäuren und/oder Iminosäuren, acylierte Aminosäuren und/oder Amphotensidkombinationen eingesetzt werden. Erfindungsgemäß besonders bevorzugt sind Alkylsulfonate mit 10 bis 17 Kohlenstoffatomen bzw. deren Salze, vorzugsweise deren Natriumsalze. Ebenfalls bevorzugt sind Alkylsulfate mit 8 bis 12 Kohlenstoffatomen bzw. deren Salze, vorzugsweise deren Natriumsalze. Beispielhaft sei Natrium-Dodecylsulfat genannt. Erfindungsgemäß ganz besonders bevorzugt ist eine Kombination von Alkylsulfonaten mit 10 bis 17 Kohlenstoffatomen bzw. deren Natriumsalzen mit Alkylsulfaten mit 8 bis 12 Kohlenstoffatomen bzw. deren Natriumsalzen. Ebenso kann im Mittel auch Dodecyl-[2EO]-ethersulfat-Natriumsalz als ein Tensid eingesetzt werden. Im Handel sind beispielsweise entsprechende Produkte als ca. 30% ige Lösungen eines Dodecyl-[2EO]-ethersulfat-Natriumsalzes, das auch andere Kettenlängen und bis zu 7 EO-Einheiten enthalten kann, erhältlich. Diese können beispielhaft als ein Tensid eingesetzt werden.

Die eingesetzten Tenside oder Tensidgemische werden in Mengen von 0,5 bis 50 Gew.-%, insbesondere in Mengen von 1 bis 35 Gew.-%, ganz besonders bevorzugt in Mengen von 2 bis 25 oder 4 bis 20 Gew.-% eingesetzt, wobei in einer weiteren bevorzugten Ausführung der Erfindung ein Gemisch aus 25 bis 34 Gew.-% Alkysulfonat-Na (C₁₀ - C₁₇) mit 1,5 bis 4,5 Gew.-% Alkylsulfat-Na (C₈ - C₁₂) als Tensidkomponente (b) eingesetzt werden kann. In einer weiteren bevorzugten Ausführungsform der Erfindung kann ein Gemisch aus 10 bis 34 Gew.-%, vorzugsweise 25 bis 34 Gew.-%, eines Alkyethersulfates mit 2 bis 7 EO-Einheiten oder dessen Natriumsalzes und 1,5 bis 4,5 Gew.-% Alkylsulfat-Na (C₈ - C₁₂) als Tensidkomponente (b) eingesetzt werden.

Das Mittel enthält im Übrigen auch mindestens einen Schaumverstärker, vorzugsweise ausgewählt aus der Gruppe, bestehend aus Aminoxiden und/oder Fettaminethoxylaten. Der oder die Schaumverstärker liegen in Mengen von 0,5 bis 10 Gew.-% vor. Die Aminoxide haben vorzugsweise Kettenlängen von C₁₄ bis C₂₄. Als bevorzugtes Aminoxid wird erfindungsgemäß Cocospropylaminoxid bzw. Cocosfettsäureamidopropyldimethylaminoxid mit verschiedenen Kettenlängen (CAS Nr. 68155-09-9) eingesetzt. Das im

Mittel eingesetzte modifizierte Kokosnussöl weist dann Fettsäuren mit mittlerer Kettenlänge, d. h. Caprylsäure, Caprinsäure und Laurinsäure auf. Die entsprechenden Monoglyceride sind Monocaprylin, Monocaprin und Monolaurin. Neben den vorstehend explizit genannten Schaumverstärkern können weitere im Handel erhältliche und dem Fachmann bekannte Schaumverstärker eingesetzt werden.

Das Mittel weist ebenfalls einen Anteil an mindestens einem ätherischen Öl auf, wie z. B. Citronenöl, Orangenöl, Citronellöl, Limettenöl, Lavendelöl oder einem der Gemische davon. Durch den Zusatz dieser ätherischen Öle wird der Geruch der Nutztiere verändert, sodass dies ebenfalls einen positiven Einfluss auf das Sozialverhalten der Tiere ausübt und Beißereien vermieden oder zumindest verringert werden können. Vorzugsweise wird in der Zubereitung Citronenöl, besonders bevorzugt in Mengen von 0,1 bis 5 Gew.-% eingesetzt. Die ätherischen Öle sind gemäß einer bevorzugten Ausführungsform der vorliegenden Erfindung natürlichen Ursprungs. Der Anteil des ätherischen Öls oder des Ölgemisches im Mittel beträgt 0,1 bis 5 Gew.-%, vorzugsweise 0,2 bis 4 Gew.-%, noch bevorzugter 0,4 bis 3 Gew.-% und noch mehr bevorzugt 0,6 bis 2 Gew.-%.

Dem Mittel kann ferner mindestens eine Aminosäure, vorzugsweise ausgewählt aus der Gruppe, bestehend aus Glutaminsäure, Asparaginsäure, Tyrosin und Gemischen davon zugesetzt werden. Möglich ist es natürlich auch, alle kanonischen Aminosäuren oder einzelne aus der Gruppe der 20 kanonischen Aminosäuren oder Gemischen davon in das Mittel einzubeziehen. Die Aminosäuren oder die Gemische der Aminosäuren sind, sofern vorhanden, in Mengen von 0,1 bis 5 Gew.-% enthalten. Noch mehr bevorzugt beträgt der optionale Anteil an Aminosäure(n) 0,2 bis 4 Gew.-%, noch mehr bevorzugt 0,4 bis 3 Gew.-% und am bevorzugtesten 0,6 bis 2 Gew.-%. Gegebenenfalls kann/können dem Mittel ein oder mehrere Konservierungsmittel zugesetzt werden. Die für diesen Zweck geeigneten Konservierungsmittel sind dem Fachmann bekannt und im Handel erhältlich. Das Konservierungsmittel ist im Mittel vorzugsweise mit einem Anteil von 0,5 bis 5 Gew.-%, noch bevorzugter von 0,7 bis 4 Gew.-%, noch mehr bevorzugt von 0,9 bis 3 Gew.-% enthalten. Als Konservierungsmittel ist Benzoesäure gemäß einer Ausführungsform der vorliegenden Erfindung ganz besonders bevorzugt.

Das Mittel kann gemäß einer Ausführungsform mindestens ein Hydrotropierungsmittel oder Gemische von Hydrotropierungsmitteln, vorzugsweise mit einem Anteil von 1,0 bis 25 Gew.-% enthalten. Noch mehr bevorzugt beträgt der Anteil an Hydrotropierungsmittel 2,0 bis 20 Gew.-% und noch bevorzugter 3,0 bis 15 Gew.-%. Als Hydrotropierungsmittel kann erfindungsgemäß z. B. Cumolsulfonat und/oder Toluolsulfonat sowie deren Natrium-, Kalium- oder Ammoniumsalze und Gemische davon eingesetzt werden.

Dem Mittel können optional ferner weitere übliche Zusatz- und Hilfsstoffe zugesetzt werden. Geeignete Substanzen und Substanzgemische sind dem Fachmann wohl bekannt und können im Handel bezogen werden. Die Zusatz- und Hilfsstoffe können beispielsweise weitere pflegende Inhaltsstoffe, aber auch übliche für den Bestimmungszweck annehmbare Formulierungshilfen, Farb- und zusätzliche Duftstoffe, Puffersubstanzen, Gerüstsubstanzen, Teebaumöl, etc. sein.

Gemäß einer bevorzugten Ausführungsform umfasst das erfindungsgemäße Mittel die folgenden Komponenten:

| | |
|---|---|
| 0,5-25 Gew.-% | eines Alkylsulfonates mit 10 bis 17 Kohlenstoffatomen oder dessen Natriumsalzes, |
| 0,5-25 Gew.-% | eines Alkylsulfates mit 8 bis 12 Kohlenstoffatomen oder dessen Natriumsalzes, vorzugsweise Natriumdodecylsulfat, |
| 0,5-10 Gew.-% | eines Aminoxids mit Kettenlängen von C₁₄ bis C₂₄, vorzugsweise Cocospropylaminoxid mit verschiedenen Kettenlängen, |
| 0,1-5,0 Gew.-% | Citronenöl, |
| 1,0-10 Gew.-% | Zitronensäure, |
| 1,0-10 Gew.-% | Weinsäure und |
| Rest | Wasser. |

Gemäß einer anderen bevorzugten Ausführungsform umfasst das erfindungsgemäße Mittel die folgenden Komponenten:

| | |
|---|---|
| 5-32 Gew.-% | eines Alkylethersulfates mit 2 bis 7 EO-Einheiten oder dessen Natriumsalzes, |
| 1,5-4,5 Gew.-% | eines Alkylsulfates mit 8 bis 12 Kohlenstoffatomen oder dessen Natriumsalzes, vorzugsweise Natriumdodecylsulfat, |
| 0,5-10 Gew.-% | eines Aminoxids mit Kettenlängen von C₁₄ bis C₂₄, vorzugsweise Cocospropylaminoxid mit verschiedenen Kettenlängen, |
| 0,1-5,0 Gew.-% | Citronenöl, |
| 1,0-10 Gew.-% | Zitronensäure, |
| 1, 0-10 Gew.-% | Weinsäure und |
| Rest | Wasser. |

Anstelle des Citronenöls kann in beiden der vorstehend genannten bevorzugten Ausführungsformen auch ein anderes der vorstehend genannten ätherischen Öle oder deren Gemische eingesetzt werden. Außerdem können diesen Formulierungen ferner 0,1 bis 5 Gew.-% Benzoesäure als Konservierungsmittel zugesetzt werden. Weiterhin können diese bevorzugten Formulierungen auch mindestens ein Hydrotropierungsmittel und/oder mindestens eine Aminosäure, wie vorstehend erläutert, umfassen.

Ebenfalls im Umfang der vorliegenden Erfindung mit umfasst sind solche Formulierungen bzw. Mittel zur erfindungsgemäßen Verwendung, die, mit Ausnahme von üblichen Verunreinigungen, nur aus den vorstehend genannten wesentlichen, und gegebenenfalls einer oder mehreren der optionalen Komponenten, bestehen.

Das Mittel ist insbesondere dem pH-Wert der Tierhaut angepasst und weist somit vorzugsweise einen pH-Wert von 3,5 bis 5,5, noch mehr bevorzugt von 4,5 bis 5,5 auf.

Bei dem Mittel handelt es sich um ein flüssiges Einkomponentenprodukt, aus welchem eine wässerige, verdünnte Gebrauchslösung hergestellt werden kann, die dann 1 bis 5 Gew.-%, insbesondere 2 Gew.-% des Mittels enthält. Die vorliegende Anmeldung betrifft daher gemäß einem weiteren Aspekt auch die vorstehend erläuterte wässerige, verdünnte Gebrauchslösung zur Verwendung in einem Verfahren zur Vorbeugung von Ferkelruß, bakterieller Meningitis und Arthritis in der Intensivtierhaltung von Schweinen, Ferkeln und Sauen.

Ein weiterer Aspekt der vorliegenden Erfindung betrifft die Verwendung des vorstehend beschriebenen Mittels in der hygienischen Tierwaschung in der Intensivtierhaltung und der Geburtshygiene. Die erfindungsgemäße Verwendung ermöglicht dabei insbesondere eine Verringerung des Antibiotikabedarfs.

Es hat sich insbesondere überraschenderweise gezeigt, dass durch die Verwendung des Mittels in der Ferkelaufzucht und Mast eine Infektion mit Streptokokken und Staphylokokken, beispielsweise mit *Staphylokokkus hyicus* (Ferkelruß), präventiv verhindert oder zumindest deutlich reduziert werden kann. Das Mittel ist somit auch zur Verwendung in einem Verfahren zur Vorbeugung von Infektion von Nutztieren durch bakterielle Erreger, insbesondere durch Streptokokken und Staphylokokken einsetzbar. Das Mittel ist dabei insbesondere in der Intensivtierhaltung einsetzbar. Erfindungsgemäß wird das Mittel bei der Intensivhaltung von Schweinen, Ferkeln und Sauen zur Prävention von Ferkelruß, bakterieller Meningitis und Arthritis eingesetzt.

Die Applikation des Mittels erfolgt entweder direkt als wässerige Lösung oder vorzugsweise als Schaum oder als stark schäumende Flüssigkeit. Wird das Reinigungs- und Pflegemittel gemäß der ersten Variante als wässerige Lösung auf die zu reinigenden Tiere aufgebracht, kann eine Schaumbildung beispielsweise schon allein dadurch ausgelöst werden, dass sich die Tiere bei der Waschung aufgrund der räumlichen Enge aneinander reiben. Es sollte hier nochmals klargestellt werden, dass die Schaumbildung für die Wirkung des Mittels nicht wesentlich ist. Das heißt, die erfindungsgemäße Wirkung kann prinzipiell auch ohne Schaumbildung erzielt werden.

Wird das Mittel gemäß der zweiten und gegenwärtig bevorzugten Variante als Schaum oder stark schäumende Flüssigkeit auf die Tierhaut appliziert, kann dies beispielsweise mittels einer handelsüblichen Schaumspritze geschehen. Entsprechende Vorrichtungen sind dem Fachmann wohl bekannt.

Für beide Applikationsvarianten beträgt die Einwirkzeit des erfindungsgemäßen Mittels auf der Tierhaut vorzugsweise mindestens 10 Sekunden, vorzugsweise mindestens 20 Sekunden, noch mehr bevorzugt mindestens 30 Sekunden und ganz besonders bevorzugt mindestens 40 Sekunden. Weiterhin ist bevorzugt, dass die maximale Einwirkzeit des erfindungsgemäßen Mittels auf der Tierhaut 30 Minuten, vorzugsweise 20 Minuten, 10 Minuten oder 8 Minuten, noch mehr bevorzugt 6 Minuten und ganz besonders bevorzugt maximal 4 Minuten beträgt. Die bereits vorstehend erwähnte hohe Verträglichkeit des erfindungsgemäßen Mittels hat sich hierbei als besonders vorteilhaft erwiesen und macht die langen Einwirkzeiten möglich. Nach der Einwirkzeit wird das Mittel oder der Schaum von der Tierhaut vorzugsweise zumindest teilweise abgewaschen oder andersartig entfernt. Die auf der Tierhaut verbleibenden Bestandteile des erfindungsgemäßen Verhindern bzw. Reduzieren eine Neuverschmutzung der Tiere durch beispielsweise Gülle und Reduzieren bzw. Überdecken den Eigengeruch der Tiere, so dass Beißereien und damit Verletzungen der Tiere verringert werden können. Je nach Zusammensetzung des Mittels können hier auch hautpflegende Aspekte zum Tragen kommen.

Die Waschung der Tiere kann beispielsweise einmalig beim Einstallen der Tiere erfolgen. Dies betrifft sowohl die Einstallung von Jungtieren, beispielsweise von Ferkeln, auch die Einstallung von erwachsenen Tieren, beispielsweise von Sauen vor dem Abferkeln.

Alternativ kann eine Waschung mit dem Mittel auch einige Tage, beispielsweise 1, 2, 3, 4, 5 oder 6 Tage nach der Einstallung erfolgen. Bei der Ferkelzucht erfolgt die Waschung in diesem Fall ganz besonders bevorzugt 4 Tage nach der Einstallung.

Selbstverständlich sind je nach Bedarf auch mehrere Waschungen derselben Tiere möglich und im Umfang der vorliegenden Erfindung mit umfasst.

Die nachfolgenden Beispiele erläutern die Erfindung, ohne sie jedoch darauf einzuschränken; alle Angaben sind, sofern nicht anders angegeben, in Gew.-%.

### Beispiele

### Erfindungsgemäße Reinigungs- und Pflegemittel vom Abspültyp zur Reinigung von Tieren in der Massentierhaltung

### Nr. 1 bis 3

### Zusammensetzung Nr. 1

| | |
|---|---|
| Alkylsulfonat-Na (C₁₀-C₁₇) | 0,5-25 |
| Alkylsulfat-Na (C₈-C₁₂) | 0,5-20 |
| ein oder mehrere Aminoxide* | 0,5-10 |
| Hydrotropierungsmittel | 1,0-25 |
| Citronenöl | 0,1-5,0 |
| Zitronensäure | 1,0-10 |
| 2R,3R-Weinsäure | 1,0-10 |
| (L-(+)-Weinsäure) | |
| Wasser, gereinigt | ad 100 |

### Zusammensetzung Nr. 2

| | |
|---|---|
| Alkylsulfonat-Na (C₁₀-C₁₇) | 0,5-25 |
| Alkylsulfat-Na (C₈-C₁₂) | 0,5-25 |
| ein oder mehrere Aminoxide* | 0,5-10 |
| Hydrotropierungsmittel | 1,0-25 |
| Aminosäuren** | 0,1-5,0 |
| Lavendelöl | 0,1-5,0 |
| Zitronensäure | 1,0-10 |
| 2R,3R-Weinsäure | 1,0-10 |
| (L-(+)-Weinsäure) | |
| Wasser, gereinigt | ad 100 |

### Zusammensetzung Nr. 3

| | |
|---|---|
| Alkylsulfonat-Na (C₁₀-C₁₇) | 0,5-25 |
| Alkylsulfat-Na (C₈-C₁₂) | 0,5-25 |
| ein oder mehrere Aminoxide* | 0,5-10 |
| Hydrotropierungsmittel | 1,0-25 |
| Aminosäuren* | 0,1-5,0 |
| Citronenöl | 0,1-5,0 |
| Zitronensäure | 1,0-10 |
| 2R,3R-Weinsäure | 1,0-10 |
| (L-(+)-Weinsäure) | |
| Wasser, gereinigt | ad 100 |

| | |
|---|---|
| *Cocospropylaminoxid mit verschiedenen Kettenlängen (CAS Nr. 68155-09-9) **Aminosäuren = Gemisch aus Glutaminsäure, Asparaginsäure, Tyrosin | |

Das Alkylsulfonat ist vorzugweise Dodecylsulfat-Natrium.

Alle Formulierungen Nr. 1 bis Nr. 3 können 0,1 bis 5 Gew.-% Benzoesäure als Konservierungsmittel enthalten.

Bei der Herstellung der Beispielformulierungen Nr. 1 bis 3 geht man so vor, dass gereinigtes Wasser vorgelegt wird, die Zitronensäure und die Weinsäure darin gelöst wird. Dieser Lösung werden dann die Komponenten Alkylsulfonat, Alkylsulfat, das Aminoxid (Cocospropylaminoxid), das Hydrotropierungsmittel (bspw. Toluolsulfonat oder Cumolsulfonat, bzw. deren Natrium-, Kalium- oder Ammoniumsalze) hinzugegeben, evtl. weiteres Wasser ad 100 Gew.-% ergänzt und verrührt. Es entsteht eine klare, stark schäumende Flüssigkeit.

Die oben zuvor beschriebenen Beispielkompononenten, welche ein flüssiges Einkomponentenprodukt darstellen, werden zu einer wässrigen, verdünnten Gebrauchslösung, enthaltend 2% des Mittels verdünnt und dann mittels einer Schaumspritze zur Anwendung gebracht und auf den Tieren kurz einweichen gelassen.

### Anwendungsbeispiel

Die oben beschriebene Beispielformulierungen Nr. 1 bis 3 können jeweils zur hygienischen Tierwaschung eingesetzt werden. Dazu wird das Einkomponentenprodukt verdünnt, sodass es 2 Gew.-% der Reinigungsformulierung enthält und mittels einer Schaumspritze auf die Tiere aufgebracht.

In diesem Zusammenhang wurde ein weiterer Anwendungsversuch mit dem Tierwaschmittel gemäß der folgenden Zusammensetzung Nr. 4 unternommen, bei dem Ferkel beim Einstallen mit diesem Mittel abgewaschen wurden:

### Zusammensetzung Nr. 4 (erfindungsgemäß)

| | |
|---|---|
| Alkylethersulfat-Na mit 2-7 EO-Einheiten | 27,0 |
| Alkylsulfat-Na (C₈ - C₁₂) | 3,0 |
| Cocosfettsäureamidopropyldimethylaminoxid | 3,0 |
| (CAS Nr. 68155-09-9) | |
| Citronenöl | 1,0 |
| Zitronensäure | 4,0 |
| 2R,3R-Weinsäure | 3,0 |
| Wasser, gereinigt | ad 100 |

Bei der Herstellung der Beispielformulierung Nr. 4 geht man so vor, dass gereinigtes Wasser vorgelegt wird, die Zitronensäure und die Weinsäure darin gelöst wird. Dieser Lösung werden dann die Komponenten Alkylethersulfat, Alkylsulfat, vorzugsweise Natriumdodecylsulfat, und das Aminoxid hinzugegeben und verrührt. Es entsteht eine klare, stark schäumende Flüssigkeit. Diese Flüssigkeit wird dann zu einer wässerigen Gebrauchslösung, enthaltend 2 Gew.-% des Mittels, verdünnt, welches dann mittels einer Schaumspritze auf die Ferkel aufgebracht wird. Die Einwirkzeit betrug jeweils etwa 5 bis 10 Minuten.

Im ersten Betrieb, ein Tierzuchtbetrieb mit 2200 Aufzuchtferkeln, war keinerlei Reaktion an den Augenbindehäuten zu sehen. Die Tiere hatten keine geröteten Augen. Auch schienen die Tiere sich nach dem ersten anfänglichen Schreck sehr wohl zu fühlen, es kamen keine Anzeichen für eine Fluchtreaktion. Nach dem Waschen wurden die Tiere alle 3 Tage kontrolliert. Die Haut blieb sehr lange sauber und auch die Belastungen mit Verschmutzungen und Staphylokokkeninfektionen, etc. blieben komplett aus.

Aufgrund dieser ersten Erfahrung wurden im Lauf der nächsten 4 bis 5 Monate ca. 30000 Ferkel beim Einstallen gewaschen. In allen Fällen hat sich die hygienische Tierwaschung als sehr effektiv herauskristallisiert, denn der Antibiotika-Einsatz konnte, im Vergleich zu unbehandelten Tieren, unter anderem aufgrund eines deutlich gesunkenen Staphylokokkenund Streptokokkeninfektionsdrucks, um 50% gesenkt werden.

Die Handhabung mit einer geeigneten Spritze für den Wasserschlauch, durch die genau 2 Gew.-% des Waschmittels eingezogen werden, ist eine sehr einfache Handhabung, der Zeitaufwand ist sehr gering und durch das enge Zusammenstellen der Tiere beim Waschen können sich die Ferkel den gebildeten Schaums gegenseitig richtig einmassieren.

Zusammenfassend kann festgestellt werden, dass durch die erfindungsgemäß eingesetzten Tierwaschmittelzusammensetzungen die Tiere die Waschung sehr gut vertragen haben und nach einer Stunde bereits wieder vollständig trocken waren, keine Reizung der Augenbindehäute entstehen und auch der Antibiotika-Einsatz, im Vergleich zu nicht gewaschenen Ferkeln, um 50% reduziert werden kann.

## Patentansprüche

1. Mittel zur Verwendung in einem Verfahren zur Vorbeugung von Ferkelruß, bakterieller Meningitis und Arthritis in der Intensivtierhaltung von Schweinen, Ferkeln und Sauen, wobei das Mittel die folgenden Komponenten umfasst:
(a) 1 bis 20 Gew.-% mindestens einer organischen Säure,
(b) 0,5 bis 50 Gew.-% mindestens eines Tensids,
(c) 0,5 bis 10 Gew.-% mindestens eines Schaumverstärkers,
gegebenenfalls (d) 1,0 bis 25 Gew.-% mindestens eines Hydrotropierungsmittels,
(e) 0,1-5 Gew.-% mindestens eines ätherischen Öls,
(f) als Rest Wasser sowie gegebenenfalls (g) übliche Zusatz- und Hilfsstoffe, wobei die Komponenten (a) bis (g) zusammen 100 Gew.-% ergeben.

2. Mittel zur Verwendung nach Anspruch 1, wobei das Mittel in der hygienischen Tierwaschung und in der Geburtshygiene verwendet wird.

3. Mittel zur Verwendung nach Anspruch 1 oder 2, wobei die organische Säure ausgewählt ist aus der Gruppe, bestehend aus Zitronensäure, Weinsäure, Äpfelsäure und Gemischen davon.

4. Mittel zur Verwendung nach einem der Ansprüche 1, 2 oder 3, wobei das mindestens eine Tensid ausgewählt ist aus der Gruppe, bestehend aus Alkylsulfaten, Alkylsulfonaten, Ethersulfaten und Gemischen davon.

5. Mittel zur Verwendung nach einem der vorhergehenden Ansprüche 1 bis 4, wobei der mindestens eine Schaumverstärker ausgewählt ist aus der Gruppe, bestehend aus Aminoxiden mit Kettenlängen von C₁₄ bis C₂₄ und Fettaminethoxylaten.

6. Mittel zur Verwendung nach einem der vorhergehenden Ansprüche 1 bis 5, wobei das ätherische Öl ausgewählt ist aus der Gruppe, bestehend aus Zitronenöl, Orangenöl, Citronellöl, Limettenöl, Lavendelöl und Gemischen davon.

7. Mittel zur Verwendung nach einem der vorhergehenden Ansprüche 1 bis 6, wobei das Mittel ferner mindestens 0,1 bis 5 Gew.- % einer Aminosäure (h) enthält, die vorzugsweise ausgewählt ist aus der Gruppe, bestehend aus Glutaminsäure, Asparaginsäure, Tyrosin und Gemischen davon, wobei die Komponenten (a) bis (h) zusammen 100 Gew.- % ergeben.

8. Mittel zur Verwendung nach einem der vorhergehenden Ansprüche 1 bis 7, wobei das Mittel ferner ein Konservierungsmittel, insbesondere Benzoesäure, vorzugsweise in einem Anteil von 0,1 bis 5 Gew.-%, enthält.

9. Mittel zur Verwendung nach einem der vorhergehenden Ansprüche 1 bis 8, wobei das Mittel einen pH-Wert von 3,5 bis 5,5 aufweist.

10. Mittel zur Verwendung nach einem der vorhergehenden Ansprüche 1 bis 9, wobei das Mittel zur Prävention von Ferkelruß eingesetzt wird.

11. Wässerige verdünnte Gebrauchslösung zur Verwendung in einem Verfahren zur Vorbeugung von Ferkelruß, bakterieller Meningitis und Arthritis in der Intensivtierhaltung von Schweinen, Ferkeln und Sauen, wobei die Gebrauchslösung zwischen 1 und 5 Gew.-%, insbesondere 2,0 Gew.-% des Mittels nach einem der vorhergehenden Ansprüche 1 bis 10 umfasst.

12. Wässerige verdünnte Gebrauchslösung zur Verwendung nach Anspruch 11, wobei die Gebrauchslösung zur Prävention von Ferkelruß eingesetzt wird.

## Claims

1. Agent for use in a method for preventing greasy pig disease, bacterial meningitis and arthritis in the intensive livestock farming of pigs, piglets and sows, wherein the agent comprises the following components:
(a) 1 to 20 wt.-% of at least one organic acid,
(b) 0.5 to 50 wt.-% of at least one surfactant,
(c) 0.5 to 10 wt.-% of at least one foam booster,
optionally (d) 1.0 to 25 wt.-% of at least one hydrotropic agent,
(e) 0.1 - 5 wt. -% of at least one essential oil,
(f) the balance being water as well as optionally (g) customary additives and adjuvants, wherein the components (a) to (g) add up to 100 wt.-%.

2. The agent for use according to claim 1, wherein the agent is used in the hygienic animal washing and in the birth hygiene.

3. The agent for use according to claim 1 or 2, wherein the organic acid is selected from the group consisting of citric acid, tartaric acid, malic acid and mixtures thereof.

4. The agent for use according to any one of claims 1, 2 or 3, wherein the at least one surfactant is selected from the group consisting of alkyl sulfates, alkyl sulfonates, ether sulfates and mixtures thereof.

5. The agent for use according to any one of the preceding claims 1 to 4, wherein the at least one foam booster is selected from the group consisting of amine oxides with chain lengths of C₁₄ to C₂₄ and fatty amine ethoxylates.

6. The agent for use according to any one of the preceding claims 1 to 5, wherein the essential oil is selected from the group consisting of lemon oil, orange oil, citronella oil, lime oil, lavender oil and mixtures thereof.

7. The agent for use according to any one of the preceding claims 1 to 6, wherein the agent further comprises at least 0.1 to 5 wt.-% of an amino acid (h), which is preferably selected from the group consisting of glutamic acid, aspartic acid, tyrosine and mixtures thereof, wherein the components (a) to (h) add up to 100 wt.-%.

8. The agent for use according to any one of the preceding claims 1 to 7, wherein the agent further comprises a preservative, in particular benzoic acid, preferably in an amount of 0.1 to 5 wt.-%.

9. The agent for use according to any one of the preceding claims 1 to 8, wherein the agent has a pH value of 3.5 to 5.5.

10. The agent for use according to any one of the preceding claims 1 to 9, wherein the agent is used for the prevention of greasy pig disease.

11. Aqueous diluted ready to use solution for use in a method for preventing greasy pig disease, bacterial meningitis and arthritis in the intensive livestock farming of pigs, piglets and sows, wherein the ready to use solution comprises between 1 and 5 wt.-%, in particular 2.0 wt.-%, of the agent according to any one of the preceding claims 1 to 10.

12. Aqueous diluted ready to use solution for use according to claim 11, wherein the ready to use solution is used for the prevention of greasy pig disease.

## Revendications

1. Agent destiné à être utilisé dans un procédé visant à empêcher le développement de l'épidermite exsudative du porc, de la méningite bactérienne et de l'arthrite dans l'élevage industriel de porcs, de porcelets et de truies, ledit agent comprenant les composants suivants :
(a) 1 à 20 % en poids d'au moins un acide organique,
(b) 0,5 à 50 % en poids d'au moins un agent tensioactif,
(c) 0,5 à 10 % en poids d'au moins un agent moussant
éventuellement (d) 1,0 à 25 % en poids d'au moins un hydrotrope,
(e) 0,1 à 5 % en poids d'au moins une huile essentielle,
(f) le reste étant de l'eau ainsi qu'éventuellement (g) des additifs et agents auxiliaires usuels, la somme des composants (a) à (g) étant égale à 100 % en poids.

2. Agent destiné à l'utilisation selon la revendication 1, ledit agent étant utilisé dans le lavage hygiénique des animaux et dans l'hygiène lors de la parturition.

3. Agent destiné à l'utilisation selon les revendications 1 ou 2, ledit acide organique étant choisi dans le groupe constitué d'acide citrique, d'acide tartrique, d'acide malique et de leurs mélanges.

4. Agent destiné à l'utilisation selon l'une des revendications 1, 2 ou 3, ledit au moins un agent tensioactif étant choisi dans le groupe constitué des alkylsulfates, des alkylsulfonates, des éthersulfates et de leurs mélanges.

5. Agent destiné à l'utilisation selon l'une des précédentes revendications 1 à 4, ledit au moins un agent moussant étant choisi dans le groupe constitué d'amines-oxydes ayant des longueurs de chaîne comprises entre C₁₄ et C₂₄ et d'éthoxylates d'amines grasses.

6. Agent destiné à l'utilisation selon l'une des précédentes revendications 1 à 5, ladite huile essentielle étant choisie dans le groupe constitué d'huile de citron, d'huile d'orange, d'huile de citronnelle, d'huile de lime, d'huile de lavande et de leurs mélanges.

7. Agent destiné à l'utilisation selon l'une des précédentes revendications 1 à 6, ledit agent contenant en outre au moins 0,1 à 5 % en poids d'un acide aminé (h) lequel est préférentiellement choisi dans le groupe constitué d'acide glutamique, d'acide aspartique, de tyrosine et de leurs mélanges, la somme des composants (a) à (h) étant égale à 100 % en poids.

8. Agent destiné à l'utilisation selon l'une des précédentes revendications 1 à 7, ledit agent contenant en outre un conservateur, s'agissant notamment d'acide benzoïque, préférentiellement dans une proportion comprise entre 0,1 et 5 % en poids.

9. Agent destiné à l'utilisation selon l'une des précédentes revendications 1 à 8, ledit agent ayant un pH compris entre 3,5 et 5,5.

10. Agent destiné à l'utilisation selon l'une des précédentes revendications 1 à 9, ledit agent étant mis en oeuvre pour prévenir l'épidermite exsudative du porc.

11. Solution aqueuse diluée prête à l'emploi, destinée à l'utilisation dans un procédé visant à empêcher le développement de l'épidermite exsudative du porc, de la méningite bactérienne et de l'arthrite dans l'élevage industrielle de porcs, de porcelets et de truies, la solution prête à l'emploi comprenant entre 1 et 5 % en poids, notamment 2,0 % en poids, de l'agent selon l'une des précédentes revendications 1 à 10.

12. Solution aqueuse diluée prête à l'emploi, destinée à l'utilisation selon la revendication 11, la solution prête à l'emploi étant mise en oeuvre pour prévenir l'épidermite exsudative du porc.
